# EUROPEAN PATENT SPECIFICATION

(11) **EP 2 084 770 B1**
(45) Date of publication and mention of the grant of the patent: **08.12.2010**
(21) Application number: 07873517.2
(22) Date of filing: 03.10.2007
(51) Int. Cl.: H01M 8/04

(54) **SYSTEM AND METHOD FOR FUEL CELL LOAD CYCLING FOR FAST WARM-UP OF A FUEL CELL STACK**
SYSTEM UND VERFAHREN ZUR ZIRKULATION EINER BRENNSTOFFZELLENLADUNG ZUR SCHNELLEN ERHITZUNG EINES BRENNSTOFFZELLENSTAPELS
SYSTÈME ET PROCÉDÉ DE CYCLAGE D'UNE PILE À COMBUSTIBLE POUR LE RÉCHAUFFAGE RAPIDE D'UN EMPILEMENT DE PILES À COMBUSTIBLE

(30) Priority: 04.10.2006 US 828194 P
(43) Date of publication of application: 05.08.2009
(73) Proprietor: Daimler AG, 70327 Stuttgart (DE)
(72) Inventor: FELLOWS, Richard, G., Vancouver, British Columbia V5S 4K3 (CA); GILCHRIST, Ian, T., Vancouver, British Columbia V5Y 2A4 (CA)
(74) Representative: Beyer, Andreas
(86) International application number: PCT/US2007/080312
(87) International publication number: WO 2008/127354

(56) References cited:
- EP-A- 1 505 678
- JP-A- 61 118 971
- JP-A- 63 045 767

## Description

### TECHNICAL FIELD

The present disclosure relates generally to fuel cells, and in particular but not exclusively, relates to start-up of a fuel cell stack, such as a stack of solid polymer electrolyte fuel cells.

### BACKGROUND INFORMATION

Electrochemical fuel cell systems are being developed for use as power supplies in a number of applications, such as automobiles, stationary power plants, and other applications. Such fuel cell systems offer the promise of energy that is essentially pollution free, unlike conventional energy sources such as fossil fuel burning thermal power plants, nuclear reactors, and hydroelectric plants that all raise environmental issues.

Fuel cells convert reactants (fuel and oxidant) to generate electric power and reaction products (such as water). Fuel cells generally comprise an electrolyte disposed between cathode and anode electrodes. A catalyst induces the appropriate electrochemical reactions at the electrodes. The fuel cell may, for example, take the form of a solid polymer electrolyte fuel cell that comprises a solid polymer electrolyte and that operates at relatively low temperatures. During normal operation of a solid polymer electrolyte fuel cell, fuel is electrochemically oxidized at the anode catalyst, resulting in the generation of protons, electrons, and possibly other species. The protons are conducted from the reaction sites at which they are generated, through the electrolyte, to electrochemically react with the oxidant at the cathode catalyst.

Solid polymer electrolyte fuel cells are typically arranged as a fuel cell stack, and generally employ a membrane electrode assembly (MEA) comprising a solid polymer electrolyte or ion exchange membrane disposed between the two electrodes. Typically, the electrolyte is bonded under heat and pressure to the electrodes, and thus such an MEA is dry as assembled and hydrated as part of the activation process for the fuel cell stack.

Conventional fuel cells operate at a relatively high minimum stack and/or cell voltage during normal operating conditions. However, during start-up conditions, start-up voltages are significantly less than the voltages provided from the fuel cells during normal operation. Accordingly, a period of time is required for the start-up phase before sufficient voltage and current are available from the fuel cell stack.

Further, in colder climates, such fuel cell stacks may frequently be subjected to temperatures below freezing. When the fuel cells are relatively cold, the electrochemical reaction process is very inefficient. Additionally, the power output capability from fuel cells is typically very limited at temperatures well below the normal operating temperature. Thus, conventional measures are taken to provide heat to the fuel cells during start-up to expedite the start-up process.

Some conventional approaches for starting up a fuel cell stack include employing an external power source (*e.g*., a storage battery) or a heaterto heat the fuel cells up to a temperature at which fuel cell operation is commenced. These approaches allow high current to be drawn when starting-up during cold temperatures, and therefore reduce the time for the start-up process to complete. However, these approaches require additional equipment (thereby resulting in increased cost, weight, and volume) just for start-up purposes and generally require a net input of energy during start-up. EP 1505678 discloses a fuel cell system having a controller for controlling a heater during starting-up of the fuel cell.

Other approaches reduce the fuel cell stack voltage to close to zero volts during start-up on cold conditions. While such approaches may allow for fast start-ups, additional electronics may need to be implemented in order to provide this functionality. Moreover, such approaches may not allow certain loads to be sufficiently powered during start-up.

For example, various balance of plant (BOP) devices supporting operation of a fuel cell system are not designed for operation at the reduced voltages provided by the fuel cells during start-up. An example of a BOP load is an air compressor that provides a nominal rate of airflow to the fuel cells when powered, or sourced, at the nominal voltage range during normal operating conditions. Another example is a coolant pump that circulates a coolant through the fuel cell stack at a nominal rate when powered at the nominal voltage range. A further example is an anode recirculation pump that recirculates a reactant fluid to the fuel cells at a nominal rate when powered at the nominal voltage range. Accordingly, during the start-up process before sufficient voltage and current are available from the fuel cell stack, these BOP loads are powered from an auxiliary power supply, such as a battery, an ultracapacitor, and/or a relatively small combustion engine. However, such auxiliary power supplies may be limited in their output current and/or energy capacity during the start-up process, thereby limiting the number of BOP loads and/or limiting the time that the BOP loads may be connected.

. Furthermore, during the start-up process before sufficient voltage and current are available from the fuel cell stack, other system loads must be powered from the auxiliary power supply if they are to be operational. Otherwise, the other loads must remain off until normal operation conditions wherein the fuel cell stack provides sufficient voltage and current to support operation of the loads.

Fuel cell stacks generally operate at temperatures above ambient temperature. Therefore, heat is lost from the fuel cell system to the environment. This can result in fuel cell system temperatures below what is required for good fuel cell operation. Furthermore, low temperatures in the stack, gas streams, air ducts, stacks, or associated components, can result in condensation or ice formation. These problems can be particularly acute when the ambient temperature is low. Also, when the fuel cell stack is designed to be cooled directly by an air stream, it can be difficult to keep heat losses low. Also, when the load of the fuel cell system is low, the amount of heat that is generated in the fuel cell stack is small, so low temperatures can result. It is known that additional loads, such as electric heaters, can increase the amount of heat that is generated in the fuel cell stack and elsewhere, and that this approach can prevent the problem of low temperatures. However, additional loads can require extra equipment and can result in additional cost, volume, and weight.

### BRIEF SUMMARY

According to one aspect, a fuel cell system is coupleable to a load adapted to sink a load steady state electrical power for a steady state period of time and adapted to sink a load peak electrical power for a reduced period of time less than the steady state period of time. The fuel cell system comprises at least one fuel cell to generate electrical power and a controller adapted to control delivery of the electrical power generated by the fuel cell to provide a first level of electrical power to the load for a first period of time and a second level of electrical power to the load for a second period of time. The first level of electrical power is less than or equal to the load steady state electrical power, and the second level of electrical power is greater than the load steady state electrical power and less than or equal to the load peak electrical power. The controller is adapted to control said delivery by repeated cycle of said electrical power between said first and second levels.

According to another aspect, a method is provided to start a fuel cell system having at least one fuel cell and coupleable to at least one load. The method comprises during a start-up phase of the fuel cell system, repeatedly cycling between a first level of electrical power to the load for a first period of time and a second level of electrical power to the load for a second period of time, wherein the load is capable to sink a steady state electrical power during a steady state period of time, and is capable to sink a peak electrical power during a reduced period of time less than the steady state period of time, and wherein the first level of electrical power is less than or equal to the steady state electrical power, and the second level of electrical power is greater than the steady state electrical power and is less than or equal to the peak electrical power. The method includes terminating the cycling when or before an optimum operating temperature associated with the fuel cell is reached.

According to still another aspect, an apparatus for starting a fuel cell system having at least one fuel cell and adapted to be coupled to at least one load is provided. The apparatus comprises means for generating power that can be delivered to the load. The apparatus includes means for cycling, during a start-up phase of the fuel cell system, between a first level of the generated electrical power to the load for a first period of time and a second level of the generated electrical power to the load for a second period of time, wherein the load is capable to sink a steady state electrical power during a steady state period of time, and is capable to sink a peak electrical power during a reduced period of time less than the steady state period of time, and wherein the first level of electrical power is less than or equal to the steady state electrical power, and the second level of electrical power is greater than the steady state electrical power and is less than or equal to the peak electrical power.

According to yet another aspect, an article of manufacture comprises a machine-readable medium usable in a fuel cell system and having machine-readable instructions stored thereon that are executable by one or more processors to start the fuel cell system, by: during a start-up phase of the fuel cell system, controlling repeated cycling between a first level of electrical power to the load for a first period of time and a second level of electrical power to the load for a second period of time, the electrical power being provided at least in part by a fuel cell of the fuel cell system, wherein the load is capable to sink a steady state electrical power during a steady state period of time, and is capable to sink a peak electrical power during a reduced period of time less than the steady state period of time, and wherein the first level of electrical power is less than or equal to the steady state electrical power, and the second level of electrical power is greater than the steady state electrical power and is less than or equal to the peak electrical power; and controlling termination of the cycling of the electrical power when or before an optimum operating temperature associated with the fuel cell is reached, and controlling ramping up electrical power delivered to the load when or before the optimum operating temperature is reached.

### BRIEF DESCRIPTION OF THE SEVERAL VIEWS OF THE DRAWINGS

In the drawings, identical reference numbers identify similar elements or acts. The sizes and relative positions of elements in the drawings are not necessarily drawn to scale. For example, the shapes of various elements and angles are not drawn to scale, and some of these elements are arbitrarily enlarged and positioned to improve drawing legibility. Further, the particular shapes of the elements as drawn are not intended to convey any information regarding the actual shape of the particular elements, and have been solely selected for ease of recognition in the drawings.
Figure 1 is a schematic block diagram of an embodiment of a fuel cell in a fuel cell stack.
Figure 2 is a block diagram of an embodiment of a fuel cell system that can provide fast warm-up of the fuel cell stack of Figure 1 during a start-up phase.
Figures 3-5 are graphs illustrating behavior of certain parameters associated with fast warm-up of the fuel cell stack of Figures 1-2 during a start-up phase according to various embodiments.
Figure 6 is a graph illustrating behavior of certain parameters associated with conventional warm up of a fuel cell stack.
Figure 7 is a flowchart of an embodiment of a method to provide fast warm-up of the fuel cell stack of Figures 1-2 during a start-up phase based on at least some of the graphs of Figures 3-5.

### DETAILED DESCRIPTION

Embodiments of techniques for fast warm-up of a fuel cell stack during a start-up phase, such as by cycling power to a load powered by the fuel cell stack, are described herein. For example, one or more embodiments increase the rate of heat generation to heat up the fuel cell system quickly after startup or to compensate for excessive heat losses to the environment. In the following description, numerous specific details are given to provide a thorough understanding of embodiments. However, the embodiments can be practiced without one or more of the specific details, or with other methods, components, materials, etc. In other instances, well-known structures, materials, or operations are not shown or described in detail to avoid obscuring aspects of the embodiments.

Reference throughout this specification to "one embodiment" or "an embodiment" means that a particular feature, structure, or characteristic described in connection with the embodiment is included in at least one embodiment. Thus, the appearances of the phrases "in one embodiment" or "in an embodiment" in various places throughout this specification are not necessarily all referring to the same embodiment. Furthermore, the particular features, structures, or characteristics may be combined in any suitable manner in one or more embodiments.

The headings provided herein are for convenience only and do not interpret the scope or meaning of the claimed invention. Furthermore, certain figures herein depict various power, voltage, current, etc. waveforms. These waveforms are intended to be illustrative for purposes of understanding operation of embodiments, and are not intended to be drawn to scale and/or to precisely and accurately depict waveform behavior in terms of shape, amplitude, duty cycle, frequency, distortion, or other characteristics.

As an overview, an embodiment cycles power provided to a load in a fuel cell system between a high power level and a low power level. The cycled power levels are provided during a start-up phase of a fuel cell stack of the fuel system, such as during a cold start-up condition. During the high power level part of the cycles, the power is delivered to a battery and/or other load, so that the battery is charged and/or the other load receives sufficient power during the start-up phase. During the low power level part of the cycles, the battery can deliver power to other load(s).

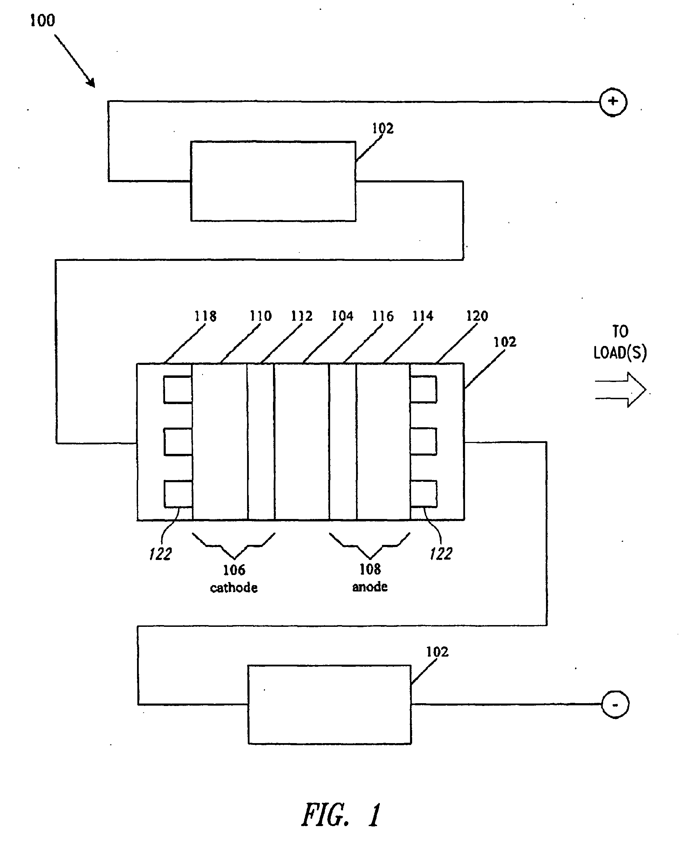

Figure 1 is a schematic block diagram of an embodiment of a fuel cell stack 100. The fuel cell stack 100 comprises at least one fuel cell 102, only one of which is shown in detail in Figure 1 for the sake of simplicity. The fuel cells 102 individually generate a voltage and are coupled in series, for example, to provide a higher overall DC output voltage from output terminals of the fuel stack 100. A current, common to all of the fuel cells 102, is provided as output current by the fuel cell stack 100. In an example embodiment, the fuel cell stack 100 comprises 4 rows of fuel cells 102, with 100 fuel cells in each row. Other embodiments can have any suitable number of rows and fuel cells 102 in each row.

According to an embodiment, each fuel cell 102 comprises a solid polymer electrolyte fuel cell. The fuel cell 102 of such an embodiment comprises a membrane electrode assembly (MEA), which itself comprises a solid polymer electrolyte membrane 104 disposed between a cathode 106 and an anode 108. The cathode 106 comprises a porous substrate 110 and a catalyst layer 112. The anode 108 comprises a porous substrate 114 and a catalyst layer 116. The fuel cell 102 further comprises field plates 118 and 120 with inlet ports to receive oxidant and fuel, and with outlet ports for oxidant and fuel exhaust. According to an embodiment, one or more inlet ports of the fuel cell 102 can be used to receive steam or water for hydration purposes during startup, operation, shutdown, storage, etc. as needed. One or more inlet ports in an embodiment can also receive recirculated fuel, coolant, and so forth.

The inlet and outlet ports are symbolically depicted at 122 in Figure 1. It is appreciated that such depiction is intended merely for ease of illustration and explanation, and is not intended to precisely depict the size, location, number, arrangement, or other details of such inlet/outlet ports 122. A person skilled in the art having the benefit of this disclosure would be familiar with such details of the inlet/outlet ports 122.

As explained above for some embodiments, the fuel cell stack 100 may have a recirculation system designed to recirculate the fuel exhaust stream from each fuel cell 102 to the fuel inlet of each fuel cell 102. In other embodiments of the fuel cell stack 100, recirculation systems are not implemented.

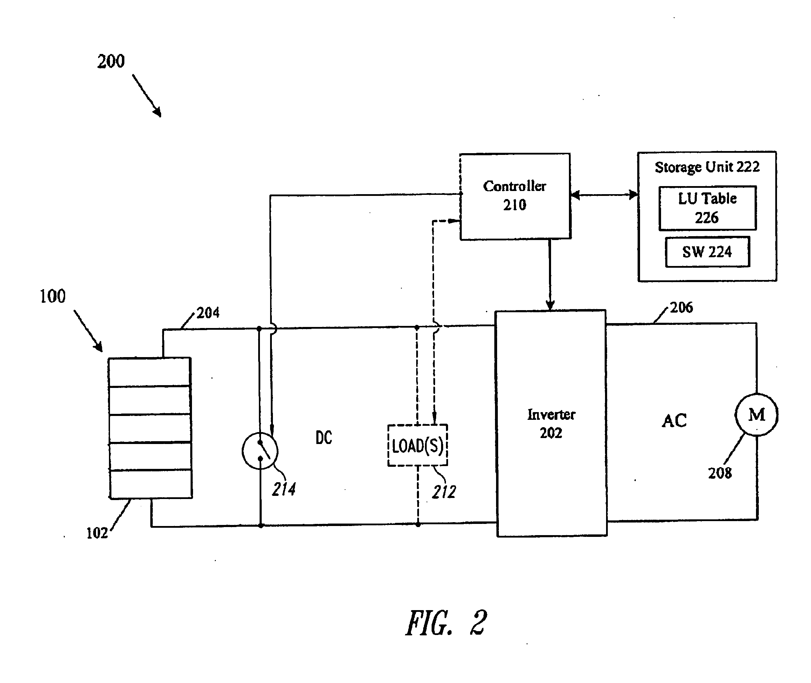

Figure 2 is a block diagram of an example embodiment of fuel cell system 200 that comprises the fuel cell stack 100 of Figure 1 and which further comprises components associated with expediting warm-up of the fuel cell stack 100 during start-up conditions in accordance with an embodiment. For purposes of clarity and simplicity of explanation, not all of the possible components present in the fuel cell system 200 (such as filters, switches, fuses, signal processing equipment, or other electrical and/or mechanical components) are shown and described herein. Only the components useful for understanding operation of one or more embodiment for fast warm-up of the fuel cell stack 100 during the start-up process are shown and described.

In the fuel cell system 200, the fuel cell stack 100 (comprising a plurality of individual fuel cells 102) is coupled to an inverter 202. The fuel cell stack 100 provides DC signals to the inverter 202 by way of a DC bus 204. The inverter 202 is coupled via an AC bus 206 to at least one load 208 on the AC side of the inverter 202.

The inverter 202 inverts the incoming DC signals into AC signals that supply AC power to the load(s) 208. Purely by way of example, the load 208 in Figure 2 is depicted as an electric drive motor or other electrical machine, which can comprise part of an integrated powertrain (IPT) for a vehicle. Other types of electrical loads (and/or combinations thereof) may be supplied with AC power by the fuel cell system 200 on the AC side of the inverter 202. Moreover, the buses 204 or 206 can be uni-directional or bi-directional.

The inverter 202 contains circuitry and/or logic appropriate to extract DC power from the fuel cell stack 100 (five fuel cells 102 being shown in Figure 1 as an example), invert the extracted DC power to AC power, and export the AC power to the load 208. The inverter 202 of one embodiment comprises a plurality of switches, such as six insulated gate bipolar transistors (IGBTs) that comprise pairs of switches for a 3-phase inverter. In one embodiment, the inverter 202 comprises a voltage source inverter working in current control mode. One possible example embodiment of the inverter 202 is described in U.S. Patent Application Serial No. 10/447,708, entitled "METHOD AND APPARATUS FOR MEASURING FAULT DIAGNOSTICS ON INSULATED GATE BIPOLAR TRANSISTOR CONVERTER CIRCUITS," filed May 28, 2003 (now issued U.S. Patent No. 6,927,988), and incorporated herein by reference in its entirety. Other example embodiments for the inverter 202 are disclosed in other issued patents and published applications owned by the assignee of the present application.

A controller 210 (such as one or more microcontrollers, microprocessors, or other processor) controls the switching and other associated operations of the inverter 202 and/or operation of various other components of the system 200. In one embodiment, the controller 210 provides pulse width modulation (PWM) control signals to the inverter 202 to control operation of the switches therein. For example, the PWM control signals from the controller 210 (applied to control gates of the switches) can control the switching frequency of the inverter 202 to be at 5 kHz - 8 kHz (or higher/lower).

The controller 210 of one embodiment is coupled to a storage unit 222 or other machine-readable storage medium, such as a computer-readable storage medium in the form of a memory. In an embodiment, the storage unit 222 is encoded with or otherwise stores software 224 (such as a computer program) that is executable by the controller 210 in connection with performing various operations directed towards expediting warm-up of the fuel cell stack 100 during the start-up process, which will be described in further detail below. For example in one embodiment, the controller 210 can cooperate with the software 224 to generate suitable PWM signals or other signals to cause cycling of the power provided to the load 208 and/or to other loads.

In another example embodiment, the controller 210 can additionally or alternatively access a lookup table 226 to determine the appropriate timing, duration, conditions, etc. associated with controlling fast warm-up of the fuel cell stack 100 during start-up, including cycling power delivered to the load 208 and/or to other load(s).

According to one embodiment, the system 200 may comprise one or more other loads 212 (and associated circuitry or components) coupled to the DC side of the inverter 202. For example, such load(s) 212 can comprise, but not be limited to, one or more energy storage devices (such as a battery), a BOP device (such as an air compressor, coolant pump, recirculation pump, etc. discussed above), a supercapacitor, a rotating device such as a flywheel, or other types of devices and/or combinations thereof. In the context of a battery, the battery can provide power to the controller 210, for example during the start-up process and/or afterwards. Such one or more batteries can also provide power to other components of the system 200 as appropriate.

In one embodiment, the system 200 can comprise a short-circuit device 214, such as a switch, a resettable fuse, or other appropriate device that can be controlled by the controller 210. In such an embodiment and as will be described in further detail below, the short-circuit device 214 can be controlled by the controller 210 in a manner to short circuit the fuel cell stack 100 (high current, low voltage) during low power cycling.

Various components have been explicitly labeled or otherwise described as "loads" in Figure 2, such as the loads 208 and 212. Other components of the system 200 can also be considered as loads with respect to the fuel cell stack 100. Such components can comprise, but not be limited to, the controller 210, the storage unit 222, the inverter 202, and so forth. Moreover, the depiction of the various loads of Figure 2 is understood to comprise switches, circuitry, or other components associated with providing power or other input to such loads, providing output from such loads, and so forth.

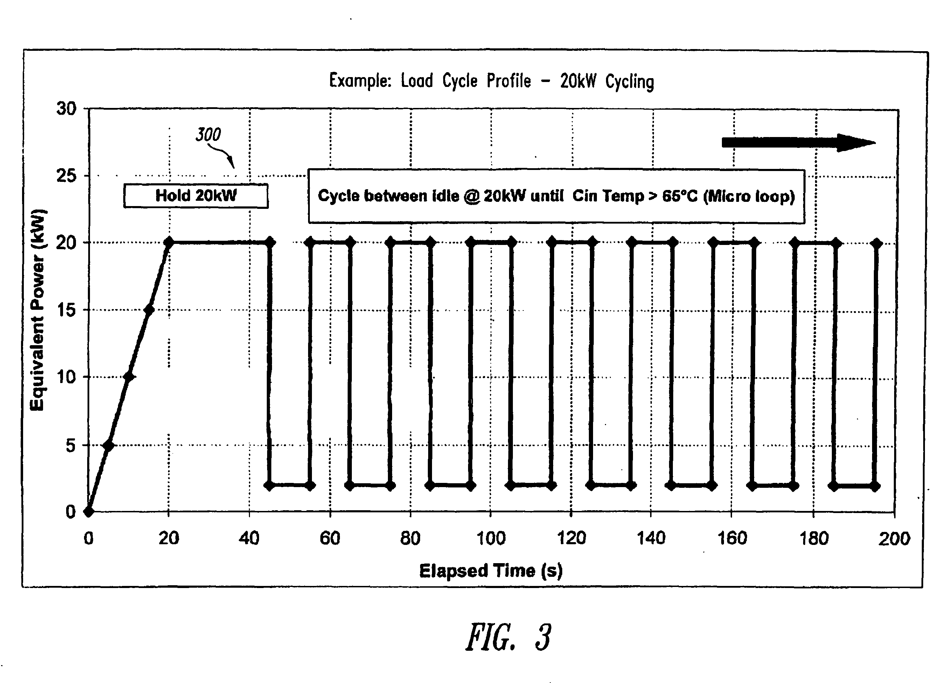

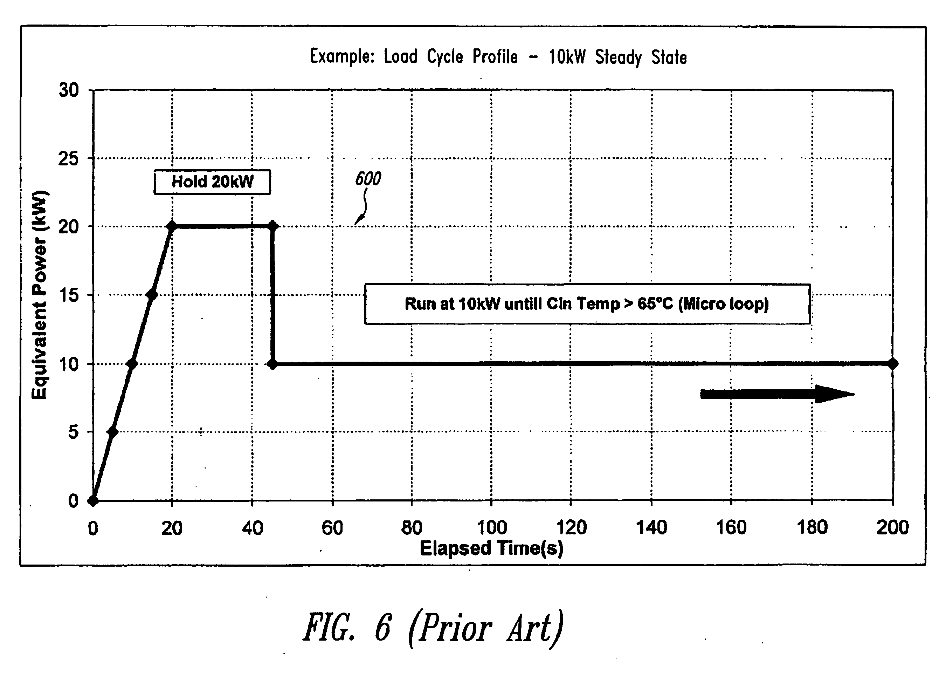

Figures 3-5 are graphs that plot example behavior(s) of some parameters associated with the fuel cell system 200 (such as power delivered to a load, load current, coolant inlet temperature, coolant outlet temperature, etc.) over time according to various embodiments. Specifically, Figures 3-5 plot the example behavior(s) of such parameters during the start-up process according to one embodiment that uses load cycling (*e.g*., cycles power to the one or more loads described above with respect to Figure 2) during start-up, and Figure 6 plots the behavior of such parameters during a conventional start-up process that uses a steady state delivery of power to the load(s) during start-up.

In the various graphs of Figures 3-5 and/or elsewhere, specific example values for the parameters of power, voltage, current, time, temperature, etc. are provided. Such values are merely for purposes of explanation to give context to the relationships shown in the graphs. While some embodiments can be implemented in a manner that uses or otherwise obtains such specific values, other embodiments can be implemented with and/or result in other values of these parameters.

Moreover and as previously explained above, the graphs are not to be construed as necessarily being drawn to scale, having the precise waveform shapes as depicted, having the same duration/amplitude/frequency/duty cycle as shown, etc. Such characteristics of the waveforms can vary from one embodiment to another and/or in response to certain conditions.

Beginning first with Figure 3, shown generally at 300 is a waveform depicting electrical power (in kW) provided to one or more of the loads described above. In this embodiment, it is assumed that the maximum steady state power provided to the load is 10 kW, the fuel cell stack 100 is starting at a start-up temperature of -15° C at time=0 seconds, and current delivered to the load is low at time=0 seconds, and power delivered to the load is 0 kW at time=0 seconds. Moreover, it is assumed that the load is capable of sinking the maximum steady state electrical power for a steady state period of time (which can be indefinite in length), and is capable of sinking a peak electrical power for a reduced period of time that is less than the steady state period of time.

From time=0 seconds to time=20 seconds, for example, the electrical power that is provided to the load is ramped upward from 0 kW to 20 kW (which is 20% of the peak electrical power that can be sunk into the load), corresponding to an equivalent of 120 V minimum. From time=20 seconds to time=45 seconds, the provided electrical power is held at 20 kW in one embodiment.

At time=45 seconds, the amount of provided electrical power drops from 20 kW to a low power level of 2 kW or less (corresponding to a low current of 5 A), and held at this low/idle power level until time=55 seconds. Thus, this low power level is less than or equal to the maximum steady state electrical power of 10 kW that can be sunk by the load. In the embodiment of Figure 3, the low power level is held for 10 seconds. This period of time is merely illustrative. Other embodiments can provide a different period of time for the low power level, such as five seconds or other amount of time, for example.

At time=55 seconds, the electrical power provided to the load increases to a high power level of 20 kW (corresponding to a high current value of 68 A), and held at 20 kW for 10 seconds from time=55 seconds to time=65 seconds. Again, this period of time for the high power level is merely illustrative and can take on other values, such as five seconds or other amount of time.

Thereafter, from time=65 seconds and onward, the electrical power provided to the load from the fuel cell stack 100 cycles, oscillates, or otherwise alternates between the idle low power level and the high power level of 20 kW. This cycling continues until the coolant inlet temperature into the fuel cell stack 100 reaches 65° C or more, or otherwise reaches some optimum operating temperature for the fuel cell stack 100. In one example embodiment, the time to reach 65° C or more for the coolant inlet temperature is approximately 26 minutes.

In one embodiment, the cycling between the low power level and the high power level can be performed by having the controller 210 provide appropriate control signals to the inverter 202, such as to switch the IGBTs therein to control the delivery of power to the load 208 on the AC side of the inverter 202 according to the cycling profile such as shown in Figure 3. Alternatively or additionally, the controller 210 can provide appropriate signals to control switching or other operation to power the load(s) 212 on the DC side of the inverter 202.

In another embodiment, the controller 210 can control the short-circuit device 214 to place the short-circuit device 214 in a first state (*e.g*., a closed switch) in a manner to short circuit the fuel cell stack 100 during the low power mode, such that high stack current and very low stack voltage is obtained. The controller 214 can then control the short-circuit device 214 to place the short-circuit device 214 in a second state (*e.g*., an open switch) in a manner to transition the fuel cell stack 100 to operate in the high power mode.

In one embodiment, when the fuel cell stack 100 is in the high power mode that provides the 20 kW power, such as shown in Figure 3, such power can be used to charge one or more batteries in the load 212 and/or to power any other appropriate loads of the fuel cell system 200 that may require power during start-up. When the fuel cell stack 100 is in the low power mode that provides the 5 kW or less power, such as also shown in Figure 3, then the load(s) can be powered by these batteries.

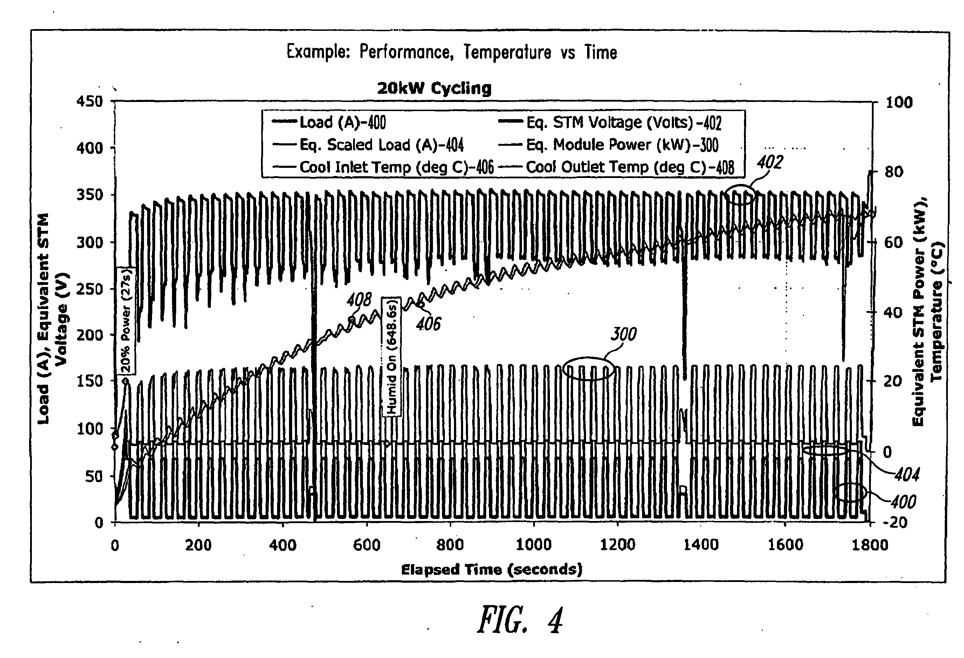

Figure 4 provides some comparative graphs between various parameters associated with the fuel cell system 200 during the start-up process that uses cycling up to 20 kW, including the power waveform 300 previously described, a load current waveform 400 depicting current delivered to the load, a corresponding voltage waveform 402, an equivalent scaled load current 404, coolant inlet temperature waveform 406, and coolant outlet temperature waveform 408. As depicted by the waveforms 406 and 408 in Figure 4, the coolant inlet and outlet temperatures of the fuel cell stack 100 reaches the example optimum operating temperature of approximately 65° C or more towards the end of the cycling process.

In an embodiment, coolant flow into the fuel cell stack 100 can be stopped during the period of times of high current, such as corresponding to the periods of time for the high power levels. When the current is low, the coolant can be made to flow forward into the fuel cell stack 100 and then back out again, or back out and then forward into again. This flow of coolant can melt any ice blockages upstream and/or downstream of the active flow area of the fuel cell stack 100. The minimization or other removal of ice that had formed in the fuel cell stack 100 prior to the time of start-up will desirably result in reduction of subsequent Recoverable Performance Loss (RPL). Moreover, the cold coolant that enters the fuel cells 102 during this flow process would not cause more sub-zero degree fuel cell reaction to occur, since the current is essentially zero or otherwise low at this time.

In one embodiment, a micro-coolant loop is used during the warm-up that is performed in the start-up process. Other types of coolant loops and/or coolant flow techniques may be use in other embodiments.

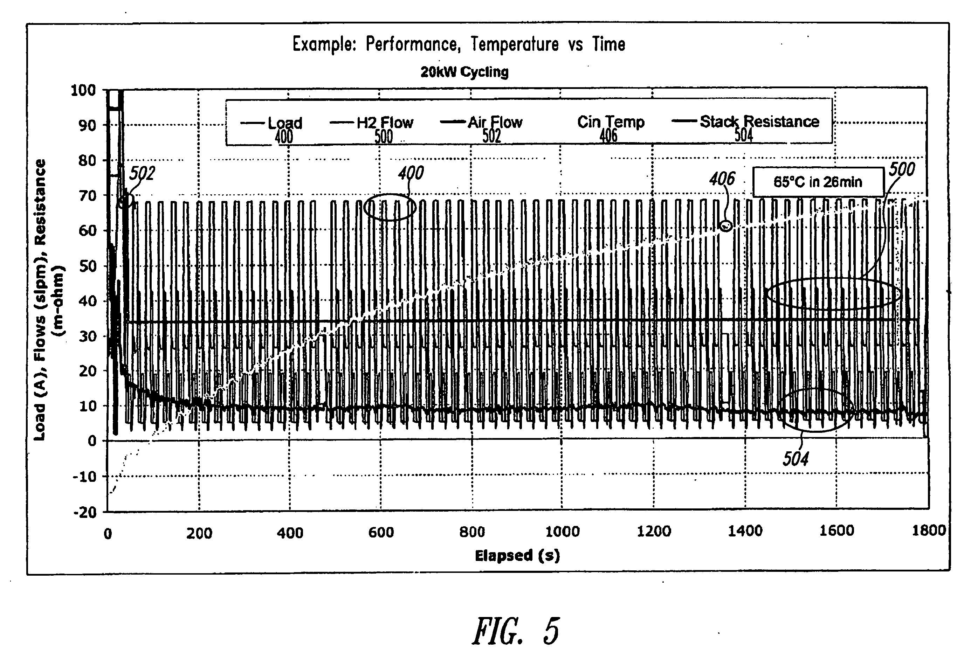

Figure 5 provides some comparative graphs between various other parameters associated with the fuel cell system 200 during the start-up process that uses cycling up to 20 kW, including the load current waveform 400 previously described, the coolant inlet temperature waveform 406 previously described, hydrogen flow waveform 500, air flow waveform 502, and fuel cell stack resistance waveform 504.

It can thus be noted from the cycling embodiments described above that average heat production is maximized by cycling the power provided by the fuel cell stack 100, as compared to heat production at an average power. If the average power that can be consumed by the load is limited, the embodiments of the cycling methods described above allow maximization of heat generation. Further, battery inefficiency during the charging (corresponding to the high power mode for the fuel cell stack 100) and discharging (corresponding to the low power mode for the fuel cell stack 100) will further increase heat production in the fuel cell stack 100, and will also warm up the battery, thereby providing faster battery warming.

Moving next to Figure 6, shown generally at 600 is a waveform depicting electrical power (in kW) provided to a load according to a conventional start-up technique that uses steady state power delivery. As with the embodiment in Figure 3, the technique of Figure 6 assumes that the steady state power provided to the load is 10 kW, the fuel cell stack 100 is starting at a start-up temperature of -15° C at time=0 seconds, and current delivered to the load is low at time=0 seconds, and power delivered to the load is 0 kW at time=0 seconds. Moreover, it is again assumed that the load is capable of sinking a maximum steady state electrical power (*e.g*., 10 kW) for a steady state period of time (which can be indefinite in length).

From time=0 seconds to time=20 seconds, for example, the electrical power that is provided to the load is ramped upward from 0 kW to 20 kW (which is 20% of the peak electrical power that can be sunk into the load), corresponding to an equivalent of 120 V minimum. From time=20 seconds to time=45 seconds, the provided electrical power is held at 20 kW.

At time=45 seconds, the provided electrical power is dropped to the steady state level of 10 kW (corresponding to a load current of 30 A), and held at that level until an example optimum operating temperature for the fuel stack 100 is reached (such as equal to or greater than approximately 65° C).

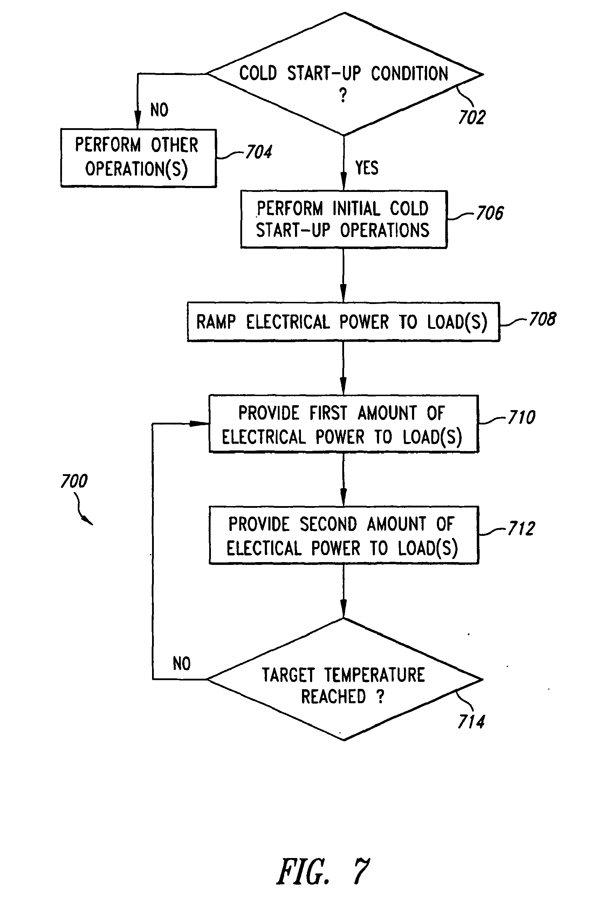

Figure 7 is a flowchart of a method 700 to provide fast warm-up of the fuel cell stack 100, such as during cold environmental conditions. Elements of one embodiment of the method 700 may be implemented in software or other machine-readable instructions (such as computer-readable instructions) executable by one or more processors (such as the controller 210) and encoded in or otherwise stored on a machine-readable medium (such as a computer-readable medium, like a memory). Examples comprise the software 224 stored in the storage unit 222 of Figure 2. The various operations depicted in the method 700 need not occur in the exact order shown. Moreover, certain operations can be modified, added, removed, combined, or any combination thereof.

At a block 702, the controller 210 (or other component of the system 200) determines whether a cold start-up condition is present. For example, temperature sensors may detect the temperature of the fuel cell stack 100 and/or ambient air temperature and provide the detected temperature to the controller 210. The controller 210 can then compare the detected temperature with a threshold temperature (which may be stored in the lookup table 226 of Figure 2, for example) to determine whether to perform the embodiments of the start-up method described above.

If the controller 210 determines that a cold start-up condition is not present and/or that a start-up condition is not present at all at the block 702, then some other operation(s) unrelated to start-up can be performed at a block 704. If, however, the controller 210 determines that the cold start-up condition exists at the block 702, then the controller 210 or other component of the system 200 can initiate initial cold start-up operations at a block 706. Such initial operations at the block 706 can include, for example, purging the fuel cell stack 100 if appropriate or other operation to prepare the system 200 for start-up in cold conditions.

At a block 708, the electrical power provided to the load(s) by the fuel cell stack 100 is ramped up, such as shown in Figure 3 for the cycling technique. The provided power can be ramped up to 20% of the peak power level or to some other appropriate level. In one embodiment, the provided power is also held at this level for some period of time at the block 708, such as also shown in Figure 3.

At a block 710, a first amount of electrical power is provided to the load(s) for a first period of time. In the context of the cycling embodiment of Figure 3, the controller 210 is adapted to control the fuel cell stack 100 and/or other components of the system 200 such that the first amount of electrical power is less than or equal to the steady state power level.

At a block 712, a second amount of electrical power is provided to the load(s) for a second period of time subsequent to the first period of time. In the context of the cycling embodiment of Figure 3, the controller 210 is adapted to control the fuel cell stack 100 and/or other components of the system 200 such that the second amount of electrical power is greater than the steady state power level and is less than or equal to the peak power level.

The controller 210 checks whether the target temperature for optimum operation is reached at a block 714, such as by receiving temperatures detected by temperature sensors. If the target temperature is not reached, then the cycling between the first and second amounts of electrical power is repeated at the blocks 710-712.

In one embodiment, the cycling is terminated when or before the target or optimum operating temperature associated with the fuel cell stack 100 is reached at the block 714, and the electrical power delivered to the load is ramped up when or before the optimum operating temperature is reached at the block 714. In another embodiment, such terminating and/or ramping up operations are performed after the target or optimum operating temperature is reached at the block 714.

It is noted that in conventional systems/methods, steady state loads (*e.g*., currents) during the start-up (such as at freezing or otherwise low temperatures) tend to be quite low. The voltage of the fuel cell stack may be measured, but this voltage does not give an accurate indication of how much voltage the fuel cell stack would provide, if for example a driver of a vehicle powered by the fuel cell stack presses the acceleration pedal to the floor (and thus provides a high load). By cycling the load in one embodiment, a better estimate can be provided for the slope of the polarizaation curve and the maximum power that is available. Such information can be indicated on an instrument panel in the vehicle, for example. Thus, such information can for example provide the driver with an indication of when it is optimum to start driving away the vehicle.

All of the above U.S. patents, U.S. patent application publications, U.S. patent applications, foreign patents, foreign patent applications and non-patent publications referred to in this specification and/or listed in the Application Data Sheet, are incorporated herein by reference, in their entireties.

The above description of illustrated embodiments, including what is described in the Abstract, is not intended to be exhaustive or to limit the invention to the precise forms disclosed. While specific embodiments and examples are described herein for illustrative purposes, various equivalent modifications are possible and can be made without deviating from the spirit and scope of the invention.

For instance, the foregoing detailed description has set forth various embodiments of the devices and/or processes via the use of block diagrams, schematics, graphs, and examples. Insofar as such block diagrams, schematics, graphs, and examples contain one or more functions and/or operations, each function and/or operation within such block diagrams, flowcharts, graphs, or examples can be implemented, individually and/or collectively, by a wide range of hardware, software, firmware, or virtually any combination thereof. In one embodiment, the present subject matter may be implemented via Application Specific Integrated Circuits (ASICs). However, the embodiments disclosed herein, in whole or in part, can be equivalently implemented in standard integrated circuits, as one or more computer programs running on one or more computers (*e.g*., as one or more programs running on one or more computer systems), as one or more programs running on one or more controllers (*e.g*., microcontrollers) as one or more programs running on one or more processors (*e.g*., microprocessors), as firmware, or as virtually any combination thereof, and that designing the circuitry and/or writing the code for the software and or firmware can be performed in light of this disclosure.

In addition, the mechanisms taught herein are capable of being distributed as a program product in a variety of forms, and that an illustrative embodiment applies equally regardless of the particular type of signal bearing media used to actually carry out the distribution. Examples of signal bearing media include, but are not limited to, the following: recordable type media such as floppy disks, hard disk drives, CD ROMs, digital tape, and computer memory; and transmission type media such as digital and analog communication links using TDM or IP based communication links (*e.g*., packet links).

As yet another example, the inverter 202 has been described in embodiments above a type of power transformation device that can be implemented in the fuel cell system 200. It is appreciated that in other embodiments, other types of power transformation devices may be implemented in the fuel cell system 200, and which may be provided power during the start-up process as described above and/or may be used to provide such power. Examples of such other power transformation devices include, but are not limited to, DC/DC step up/down converters, AC/DC rectifiers, and the like.

These and other modifications can be made to the embodiments in light of the above detailed description. The terms used in the following claims should not be construed to limit the invention to the specific embodiments disclosed in the specification and the claims. Rather, the scope of the invention is to be determined entirely by the following claims.

## Claims

1. An apparatus for starting a fuel cell system having at least one fuel cell and adapted to be coupled to at least one load, the apparatus comprising:
means for generating power that can be delivered to the load; and
means for cycling, during a start-up phase of the fuel cell system, between a first level of the generated electrical power to the load for a first period of time and a second level of the generated electrical power to the load for a second period of time,
wherein the load is capable to sink a steady state electrical power during a steady state period of time, and is capable to sink a peak electrical power during a reduced period of time less than the steady state period of time, and
wherein the first level of electrical power is less than or equal to the steady state electrical power, and the second level of electrical power is greater than the steady state electrical power and is less than or equal to the peak electrical power.

2. The apparatus of claim 1 wherein said means for cycling includes:
means for terminating the cycling when or before an optimum operating temperature associated with the fuel cell is reached; and
means for ramping up electrical power delivered to the load when or before the optimum operating temperature is reached.

3. The apparatus of claims 1 or 2, further comprising energy storage means included as one of said load for storing at least some of the electrical power at the second level during the second period of time, and for delivering at least some of the stored power to at least another one of said load during the first period of time.

4. The apparatus of any of the preceding claims, further comprising coolant means for flowing coolant into the fuel cell to remove ice from the fuel cell during cold conditions of the start-up phase and during the first period of time, and for stopping flow of the coolant during the second period of time.

5. The apparatus of any of the preceding claims wherein the means for generating includes the fuel cell that is part of a fuel cell stack having plural ones of said fuel cell.

6. The apparatus of any of the preceding claims wherein the means for cycling includes means for short-circuiting the fuel cell during the first period of time to provide the first level of electrical power.

7. A fuel cell system coupleable to a load adapted to sink a load steady state electrical power for a steady state period of time and adapted to sink a load peak electrical power for a reduced period of time less than the steady state period of time, the fuel cell system comprising:
at least one fuel cell to generate electrical power; and
a controller adapted to control delivery of the electrical power generated by the fuel cell to provide a first level of electrical power to the load for a first period of time and a second level of electrical power to the load for a second period of time, the first level of electrical power being less than or equal to the load steady state electrical power, and the second level of electrical power being greater than the load steady state electrical power and less than or equal to the load peak electrical power, said controller being adapted to control said delivery by repeated cycle of said electrical power between said first and second levels.

8. The fuel cell system of claim 7 wherein the controller is further adapted to control said delivery by repeated cycle, until a target temperature associated with the fuel cell is reached.

9. The fuel cell system of claims 7 or 8 wherein the fuel cell is one of a plurality of fuel cells in a fuel cell stack, the fuel cell system further comprising a short-circuit device coupled to the fuel cell stack to short circuit the fuel cell stack during the first period of time to provide the first level of electrical power.

10. A method to start a fuel cell system having at least one fuel cell and coupleable to at least one load, the method comprising:
during a start-up phase of the fuel cell system, repeatedly cycling between a first level of electrical power to the load for a first period of time and a second level of electrical power to the load for a second period of time,
wherein the load is capable to sink a steady state electrical power during a steady state period of time, and is capable to sink a peak electrical power during a reduced period of time less than the steady state period of time, and wherein the first level of electrical power is less than or equal to the steady state electrical power, and the second level of electrical power is greater than the steady state electrical power and is less than or equal to the peak electrical power; and
terminating the cycling when or before an optimum operating temperature associated with the fuel cell is reached.

11. The method of claim 10, further comprising flowing coolant through the fuel cell during the first period of time, and stopping flow of the coolant through the fuel cell during the second period of time.

12. The method of claims 10 or 11 wherein terminating the cycling after the optimum operating temperature is reached includes terminating the cycling after approximately 26 minutes.

13. An article of manufacture, comprising:
a machine-readable medium usable in a fuel cell system and having machine-readable instructions stored thereon that are executable by one or more processors to start the fuel cell system, by:
during a start-up phase of the fuel cell system, controlling repeated cycling between a first level of electrical power to the load for a first period of time and a second level of electrical power to the load for a second period of time, the electrical power being provided at least in part by a fuel cell of the fuel cell system,
wherein the load is capable to sink a steady state electrical power during a steady state period of time, and is capable to sink a peak electrical power during a reduced period of time less than the steady state period of time, and
wherein the first level of electrical power is less than or equal to the steady state electrical power, and the second level of electrical power is greater than the steady state electrical power and is less than or equal to the peak electrical power; and
controlling termination of the cycling of the electrical power when or before an optimum operating temperature associated with the fuel cell is reached, and controlling ramping up electrical power delivered to the load when or before the optimum operating temperature is reached.

14. The article of manufacture of claim 13 wherein the load includes an energy storage device, wherein the instructions to control repeated cycling includes instructions to provide at least some of the electrical power at the second level during the second period of time to be stored in the energy storage device, and instructions to control delivery of at least some of the stored power to at least another one of said load during the first period of time.

## Patentansprüche

1. Vorrichtung zum Starten eines Brennstoffzellensystems mit wenigstens einer Brennstoffzelle, das mit wenigstens einer Last gekoppelt zu werden vermag, wobei die Vorrichtung umfasst:
- eine Einrichtung zum Erzeugen von elektrischer Leistung, die an die Last abgegeben werden kann, und
- eine Einrichtung zum Hin- und Herwechseln zwischen einem ersten Niveau der an die Last abgegebenen, erzeugten elektrischen Leistung für eine erste Zeitspanne und einem zweiten Niveau der an die Last abgegebenen, erzeugten elektrischen Leistung für eine zweite Zeitspanne während einer Anlaufphase des Brennstoffzellensystems,
- wobei die Last dazu in der Lage ist, eine stationäre elektrische Leistung während einer stationären Zeitspanne und eine elektrische Spitzenleistung während einer verkürzten Zeitspanne, die kürzer als die stationäre Zeitspanne ist, aufzunehmen, und
- wobei das erste Niveau elektrischer Leistung kleiner oder gleich der stationären elektrischen Leistung ist und das zweite Niveau elektrischer Leistung größer als die stationäre elektrische Leistung und kleiner oder gleich der elektrischen Spitzenleistung ist.

2. Vorrichtung nach Anspruch 1,
bei der die Einrichtung zum Hin- und Herwechseln umfasst:
- eine Einrichtung zum Beenden des Hin- und Herwechselns, wenn oder bevor eine der Brennstoffzelle zugeordnete optimale Betriebstemperatur erreicht ist, und
- eine Einrichtung zum Erhöhen der an die Last abgegebenen elektrischen Leistung, wenn oder bevor die optimale Betriebstemperatur erreicht ist.

3. Vorrichtung nach Anspruch 1 oder 2,
die ferner eine Energiespeichereinrichtung umfasst, welche eine der Lasten darstellt, zum Speichern zumindest eines Teils der auf dem zweiten Niveau befindlichen elektrischen Leistung während der zweiten Zeitspanne und zum Abgeben zumindest eines Teils der gespeicherten Leistung an wenigstens eine andere der Lasten während der ersten Zeitspanne.

4. Vorrichtung nach einem der vorhergehenden Ansprüche,
die ferner eine Kühlmitteleinrichtung zum Durchströmen der Brennstoffzelle mit Kühlmittel, um während Kaltzuständen der Anlaufphase und während der ersten Zeitspanne Eis aus der Brennstoffzelle zu entfernen, und zum Stoppen der Kühlmittelströmung während der zweiten Zeitspanne umfasst.

5. Vorrichtung nach einem der vorhergehenden Ansprüche,
bei der die Einrichtung zum Erzeugen die Brennstoffzelle umfasst, die Teil eines Brennstoffzellenstapels ist, der mehrere dieser Brennstoffzellen beinhaltet.

6. Vorrichtung nach einem der vorhergehenden Ansprüche,
bei der die Einrichtung zum Hin- und Herwechseln eine Einrichtung zum Kurzschließen der Brennstoffzelle während der ersten Zeitspanne umfasst, um das erste Niveau elektrischer Leistung bereitzustellen.

7. Brennstoffzellensystem, das mit einer Last koppelbar ist, die eine stationäre elektrische Lastleistung für eine stationäre Zeitspanne und eine elektrische Spitzenlastleistung für eine verkürzte Zeitspanne, die kürzer als die stationäre Zeitspanne ist, aufzunehmen vermag, wobei das Brennstoffzellensystem umfasst:
- wenigstens eine Brennstoffzelle zum Erzeugen elektrischer Leistung, und
- eine Steuereinrichtung, die die Abgabe der durch die Brennstoffzelle erzeugten elektrischen Leistung zu steuern vermag, um der Last ein erstes Niveau elektrischer Leistung für eine erste Zeitspanne und ein zweites Niveau elektrischer Leistung für eine zweite Zeitspanne zuzuführen, wobei das erste Niveau elektrischer Leistung kleiner oder gleich der stationären elektrischen Lastleistung und das zweite Niveau elektrischer Leistung größer als die stationäre elektrische Lastleistung und kleiner oder gleich der elektrischen Spitzenlastleistung ist, wobei die Steuereinrichtung die Abgabe durch wiederholtes Hin- und Herwechseln der elektrischen Leistung zwischen dem ersten und dem zweiten Niveau zu steuern vermag.

8. Brennstoffzellensystem nach Anspruch 7,
bei dem die Steuereinrichtung ferner dazu eingerichtet ist, die Abgabe durch wiederholtes Wechseln zu steuern, bis eine der Brennstoffzelle zugeordnete Zieltemperatur erreicht wird.

9. Brennstoffzellensystem nach einem der Ansprüche 7 oder 8,
bei dem die Brennstoffzelle eine von mehreren Brennstoffzellen in einem Brennstoffzellenstapel ist, wobei das Brennstoffzellensystem ferner eine Kurzschlusseinrichtung umfasst, die mit dem Brennstoffzellenstapel gekoppelt ist, um den Brennstoffzellenstapel während der ersten Zeitspanne kurzzuschließen, um das erste Niveau elektrischer Leistung bereitzustellen.

10. Verfahren zum Starten eines Brennstoffzellensystems, das wenigstens eine Brennstoffzelle umfasst und mit wenigstens einer Last koppelbar ist, wobei das Verfahren umfasst:
- wiederholtes Hin- und Herwechseln zwischen einem ersten Niveau an die Last abgegebener elektrischer Leistung für eine erste Zeitspanne und einem zweiten Niveau an die Last abgegebener elektrischer Leistung für eine zweite Zeitspanne während einer Anlaufphase des Brennstoffzellensystems,
- wobei die Last dazu in der Lage ist, eine stationäre elektrische Leistung während einer stationären Zeitspanne und eine elektrische Spitzenleistung während einer verkürzten Zeitspanne, die kürzer als die stationäre Zeitspanne ist, aufzunehmen, und
- wobei das erste Niveau elektrischer Leistung kleiner oder gleich der stationären elektrischen Leistung ist und das zweite Niveau elektrischer Leistung größer als die stationäre elektrische Leistung und kleiner oder gleich der elektrischen Spitzenleistung ist, und
- Beenden des Hin- und Herwechselns, wenn oder bevor eine der Brennstoffzelle zugeordnete optimale Betriebstemperatur erreicht wird.

11. Verfahren nach Anspruch 10,
das ferner das Durchströmen der Brennstoffzelle mit Kühlmittel während der ersten Zeitspanne und das Stoppen der Kühlmittelströmung durch die Brennstoffzelle während der zweiten Zeitspanne umfasst.

12. Verfahren nach einem der Ansprüche 10 oder 11,
bei dem das Beenden des Hin- und Herwechselns nach dem Erreichen der optimalen Betriebstemperatur das Beenden des Hin- und Herwechselns nach etwa 26 Minuten umfasst.

13. Herstellungsartikel, der umfasst:
- ein maschinenlesbares Medium, das in einem Brennstoffzellensystem verwendbar ist und in dem maschinenlesbare Befehle gespeichert sind, die durch einen oder mehrere Prozessoren ausführbar sind, um das Brennstoffzellensystem zu starten, und zwar durch:
- Steuern eines wiederholten Hin- und Herwechselns zwischen einem ersten Niveau an die Last abgegebener elektrischer Leistung für eine erste Zeitspanne und einem zweiten Niveau an die Last abgegebener elektrischer Leistung für eine zweite Zeitspanne während einer Anlaufphase des Brennstoffzellensystems, wobei die elektrische Leistung zumindest zum Teil durch eine Brennstoffzelle des Brennstoffzellensystems bereitgestellt wird,
- wobei die Last dazu in der Lage ist, eine stationäre elektrische Leistung während einer stationären Zeitspanne und eine elektrische Spitzenleistung während einer verkürzten Zeitspanne, die kürzer als die stationäre Zeitspanne ist, aufzunehmen, und
- wobei das erste Niveau elektrischer Leistung kleiner oder gleich der stationären elektrischen Leistung ist und das zweite Niveau elektrischer Leistung größer als die stationäre elektrische Leistung und kleiner oder gleich der elektrischen Spitzenleistung ist, und
- Steuern des Beendens des Hin- und Herwechselns der elektrischen Leistung, wenn oder bevor eine der Brennstoffzelle zugeordnete optimale Betriebstemperatur erreicht wird, und Steuern eines Erhöhens der an die Last abgegebenen elektrischen Leistung, wenn oder bevor die optimale Betriebstemperatur erreicht wird.

14. Herstellungsartikel nach Anspruch 13,
bei dem die Last eine Energiespeichereinrichtung umfasst, wobei die Befehle zum Steuern des wiederholten Hin- und Herwechselns Befehle zum Bereitstellen zumindest eines Teils der auf dem zweiten Niveau befindlichen elektrischen Leistung während der zweiten Zeitspanne, welche in der Energiespeichereinrichtung zu speichern ist, und Befehle zum Steuern der Abgabe zumindest eines Teils der gespeicherten Leistung an wenigstens eine andere der Lasten während der ersten Zeitspanne umfassen.

## Revendications

1. Appareil de démarrage d'un système de piles à combustible ayant au moins une pile à combustible et adapté à être couplé à au moins une charge, l'appareil comprenant :
un moyen de génération d'une énergie qui peut être délivrée à la charge ; et
un moyen de cyclage, pendant une phase de démarrage du système de piles à combustible, entre un premier niveau de l'énergie électrique générée jusqu'à la charge pendant une première période de temps et un deuxième niveau de l'énergie électrique générée jusqu'à la charge pendant une deuxième période de temps,
dans lequel la charge est apte à absorber une énergie électrique en régime établi pendant une période de temps de régime établi, et est apte à absorber un pic d'énergie électrique pendant une période de temps réduite inférieure à la période de temps de régime établi, et
dans lequel le premier niveau d'énergie électrique est inférieur ou égal à l'énergie électrique en régime établi, et le deuxième niveau d'énergie électrique est supérieur à l'énergie électrique en régime établi et inférieur ou égal au pic d'énergie électrique.

2. Appareil selon la revendication 1, dans lequel ledit moyen de cyclage inclut :
un moyen pour mettre fin au cyclage lorsqu'une température optimum de fonctionnement associée avec la pile à combustible est atteinte ou avant ; et
un moyen pour augmenter l'énergie électrique délivrée à la charge lorsque la température optimum de fonctionnement est atteinte ou avant.

3. Appareil selon la revendication 1 ou 2, comprenant en outre un moyen de stockage d'énergie inclus comme une de ladite charge pour stocker au moins une partie de l'énergie électrique au deuxième niveau pendant la deuxième période de temps, et pour délivrer au moins une partie de l'énergie stockée à au moins une autre de ladite charge pendant la première période de temps.

4. Appareil selon l'une quelconque des revendications précédentes, comprenant en outre un moyen de réfrigérant pour faire s'écouler un réfrigérant dans la pile à combustible pour éliminer la glace de la pile à combustible pendant des conditions froides de la phase de démarrage et pendant la première période de temps, et pour arrêter l'écoulement du réfrigérant pendant la deuxième période de temps.

5. Appareil selon l'une quelconque des revendications précédentes, dans lequel le moyen de génération inclut la pile à combustible qui fait partie d'un assemblage de piles à combustible ayant des multiples de ladite pile à combustible.

6. Appareil selon l'une quelconque des revendications précédentes, dans lequel le moyen de cyclage inclut un moyen pour court-circuiter la pile à combustible pendant la première période de temps pour fournir le premier niveau d'énergie électrique.

7. Système de piles à combustible pouvant être couplé à une charge adaptée à absorber une énergie électrique en régime établi de charge pendant une période de temps de régime établi et adaptée à absorber un pic d'énergie électrique pendant une période de temps réduite inférieure à la période de temps de régime établi, le système de piles à combustible comprenant :
au moins une pile à combustible pour générer une énergie électrique ; et
un contrôleur adapté à commander la délivrance de l'énergie électrique générée par la pile à combustible pour fournir un premier niveau d'énergie électrique à la charge pendant une première période de temps et un deuxième niveau d'énergie électrique à la charge pendant une deuxième période de temps, le premier niveau d'énergie électrique étant inférieur ou égal à l'énergie électrique en régime établi de charge, et le deuxième niveau d'énergie électrique étant supérieur à l'énergie électrique en régime établi de charge et inférieur ou égal au pic d'énergie électrique de charge, ledit contrôleur étant adapté à commander ladite délivrance par un cycle répété de ladite énergie électrique entre lesdits premier et deuxième niveaux.

8. Système de piles à combustible selon la revendication 7, dans lequel le contrôleur est en outre adapté à commander ladite délivrance par un cycle répété, jusqu'à ce qu'une température cible associée avec la pile à combustible soit atteinte.

9. Système de piles à combustible selon les revendications 7 ou 8, dans lequel la pile à combustible est l'une d'une pluralité de piles à combustible dans un assemblage de piles à combustible, le système de piles à combustible comprenant en outre un dispositif de court-circuit couplé à l'assemblage de piles à combustible pour court-circuiter l'assemblage de piles à combustible pendant la première période de temps pour fournir le premier niveau d'énergie électrique.

10. Procédé de démarrage d'un système de piles à combustible ayant au moins une pile à combustible et pouvant être couplé à au moins une charge, le procédé comprenant :
pendant une phase de démarrage du système de piles à combustible, un cyclage répété entre un premier niveau d'énergie électrique jusqu'à la charge pendant une première période de temps et un deuxième niveau d'énergie électrique jusqu'à la charge pendant une deuxième période de temps,
dans lequel la charge est apte à absorber une énergie électrique en régime établi pendant une période de temps de régime établi, et est apte à absorber un pic d'énergie électrique pendant une période de temps réduite inférieure à la période de temps de régime établi, et
dans lequel le premier niveau d'énergie électrique est inférieur ou égal à l'énergie électrique en régime établi, et le deuxième niveau d'énergie électrique est supérieur à l'énergie électrique en régime établi et inférieur ou égal au pic d'énergie électrique ; et
la fin du cyclage lorsqu'une température optimum de fonctionnement associée avec la pile à combustible est atteinte ou avant.

11. Procédé selon la revendication 10, comprenant en outre l'écoulement d'un réfrigérant à travers la pile à combustible pendant la première période de temps, et l'arrêt de l'écoulement du réfrigérant à travers la pile à combustible pendant la deuxième période de temps.

12. Procédé selon les revendications 10 ou 11, dans lequel la fin du cyclage après que la température optimum de fonctionnement a été atteinte inclut la fin du cyclage après approximativement 26 minutes.

13. Article manufacturé, comprenant :
un support lisible par une machine utilisable dans un système de piles à combustible et ayant des instructions lisibles par une machine stockées sur celui-ci qui sont exécutables par un ou plusieurs processeurs pour démarrer le système de piles à combustible,
pendant une phase de démarrage du système de piles à combustible, en commandant un cyclage répété entre un premier niveau d'énergie électrique jusqu'à la charge pendant une première période de temps et un deuxième niveau d'énergie électrique jusqu'à la charge pendant une deuxième période de temps, l'énergie électrique étant fournie au moins en partie par une pile à combustible du système de piles à combustible,
dans lequel la charge est apte à absorber une énergie électrique en régime établi pendant une période de temps de régime établi, et est apte à absorber un pic d'énergie électrique pendant une période de temps réduite inférieure à la période de temps de régime établi, et
dans lequel le premier niveau d'énergie électrique est inférieur ou égal à l'énergie électrique en régime établi, et le deuxième niveau d'énergie électrique est supérieur à l'énergie électrique en régime établi et inférieur ou égal au pic d'énergie électrique ; et
en commandant la fin du cyclage de l'énergie électrique lorsqu'une température optimum de fonctionnement associée avec la pile à combustible est atteinte ou avant, et en commandant une augmentation de l'énergie électrique délivrée à la charge lorsque la température optimum de fonctionnement est atteinte ou avant.

14. Article manufacturé selon la revendication 13, dans lequel la charge inclut un dispositif de stockage d'énergie, dans lequel les instructions pour commander le cyclage répété incluent des instructions pour délivrer au moins une partie de l'énergie électrique au deuxième niveau pendant la deuxième période de temps pour être stockée dans le dispositif de stockage d'énergie, et des instructions pour commander la délivrance d'au moins une partie de l'énergie stockée à au moins une autre de ladite charge pendant la première période de temps.
